(19) Europäisches Patentamt / European Patent Office / Office européen des brevets

(11) **EP 4 037 948 B1**

(12) **FASCICULE DE BREVET EUROPEEN**

(45) Date de publication et mention de la délivrance du brevet:
**22.11.2023 Bulletin 2023/47**

(21) Numéro de dépôt: **20800551.2**

(22) Date de dépôt: **24.09.2020**

(51) Classification Internationale des Brevets (IPC):
**B60W 40/114** *(2012.01)*   **B62D 15/02** *(2006.01)*
**B60W 50/00** *(2006.01)*

(52) Classification Coopérative des Brevets (CPC):
**B62D 6/04; B60W 40/114; B62D 15/025;**
B60W 2050/0008; B60W 2050/0014;
B60W 2420/42; B60W 2510/20; B60W 2520/06;
B60W 2520/14; B60W 2540/18; B60W 2552/15;
B60W 2552/20; B60W 2552/30; B60W 2552/53;
B60W 2710/207;                      (Cont.)

(86) Numéro de dépôt international:
**PCT/EP2020/076676**

(87) Numéro de publication internationale:
**WO 2021/063787 (08.04.2021 Gazette 2021/14)**

(54) **DISPOSITIF DE CONTRÔLE DE L'ANGLE DE BRAQUAGE D'UN VÉHICULE AUTOMOBILE À CONDUITE AUTONOME**

VORRICHTUNG ZUM STEUERN DES LENKWINKELS EINES SELBSTFAHRENDEN KRAFTFAHRZEUGS

DEVICE FOR CONTROLLING THE STEERING ANGLE OF A SELF-DRIVING MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2019 FR 1910854**

(43) Date de publication de la demande:
**10.08.2022 Bulletin 2022/32**

(73) Titulaire: **Renault S.A.S.**
**92100 Boulogne-Billancourt (FR)**

(72) Inventeurs:
• **GONZALEZ BAUTISTA, David**
**78210 Saint Cyr l'école (FR)**
• **MILANES, Vicente**
**92100 Boulogne-Billancourt (FR)**
• **NAVAS MATOS, Francisco Martin**
**75013 PARIS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**DE-A1-102007 016 829     US-B1- 6 427 130**

• **ZIEGLER JULIUS ET AL: "Making Bertha Drive?An Autonomous Journey on a Historic Route", IEEE INTELLIGENT TRANSPORTATION SYSTEMS MAGAZINE, IEEE, USA, vol. 6, no. 2, 1 juillet 2014 (2014-07-01) , pages 8-20, XP011546189, ISSN: 1939-1390, DOI: 10.1109/MITS.2014.2306552 [extrait le 2014-04-22]**

(52) Classification Coopérative des Brevets (CPC):
(Cont.)
B62D 5/0457; B62D 15/0245

**EP 4 037 948 B1**

**Description**

La présente invention concerne plus particulièrement un dispositif de contrôle de l'angle de braquage d'un véhicule automobile fonctionnant dans un mode de conduite entièrement automatisée.

Dans le contexte des systèmes automatisés d'assistance à la conduite d'un véhicule automobile proposant un mode de conduite entièrement automatisée, un dispositif de gestion d'un tel système est composé d'un contrôleur du mouvement longitudinal du véhicule et un d'un contrôleur du mouvement latéral du véhicule, qui sont aptes à générer des signaux de commande d'accélération, de freinage et de direction à destination d'actionneurs du véhicule, agissant respectivement sur l'accélérateur, les freins et le système de braquage des roues de manière que le véhicule suive une trajectoire planifiée dans un mode de conduite automatisée du véhicule.

L'angle du volant est un élément important pour les systèmes automatisés d'assistance à la conduite. Ainsi, l'angle du volant est utilisé par le contrôleur latéral pour commander l'actionneur du système de direction par l'intermédiaire d'une commande appropriée. Or, il peut arriver que l'angle de braquage du volant fourni soit erroné, soit que cette erreur résulte d'un défaut d'origine, liés à un mauvais alignement des roues avec le volant de direction en usine, soit qu'elle résulte d'un défaut lié à une dégradation avec le temps des différents capteurs utilisés pour le calcul des commandes de direction. Ces deux situations sont donc susceptibles d'entraîner une erreur dans la mesure fournie de l'angle du volant. En particulier, le fait de garder les roues du véhicule complètement droites peut néanmoins fournir une mesure de l'angle de rotation du volant différente de zéro. Un tel biais peut entraîner un accident. Ce problème n'est pas pris en compte dans les véhicules pilotés par un conducteur humain, car de telles erreurs jouent sur de faibles angles de rotations du volant auxquels un conducteur humain est aisément capable de s'adapter. Cependant, il joue un rôle crucial dans les véhicules à conduite automatisée.

En effet, pour permettre un contrôle automatisé de la dynamique latérale des véhicules autonomes, les commandes envoyées aux actionneurs doivent être précises et s'ajuster correctement à la trajectoire souhaitée du véhicule. Pour ce faire, il est important que le contrôleur latéral puisse s'adapter aux éventuels désalignements des roues du véhicule ou aux biais des différents capteurs utilisés pour le calcul des commandes destinées aux actionneurs agissant sur le système de direction du véhicule.

On connaît du document DE102008026233 un dispositif de compensation du décalage d'angle de volant, basé sur l'utilisation d'un modèle de véhicule de type modèle à voie unique, au moyen duquel une vitesse angulaire de lacet du véhicule est calculée en fonction de l'angle de volant détecté, de la vitesse du véhicule et d'un décalage d'angle de volant supposé, la vitesse angulaire de lacet ainsi calculée est ensuite comparée à une vitesse angulaire de lacet mesurée par un capteur embarqué et l'erreur issue de la différence entre les valeurs calculées et mesurées de vitesse angulaire de lacet est ensuite renvoyée dans le modèle du véhicule en tant que décalage d'angle de volant, pour déterminer et compenser de manière itérative le décalage d'angle de volant. La détermination du décalage de l'angle du volant peut ainsi s'effectuer relativement rapidement. Cependant, l'inconvénient de ce dispositif est que la compensation de ce décalage ne tient pas seulement compte d'un éventuel défaut d'alignement des roues, mais aussi de l'inclinaison de la route. Cela peut entraîner un comportement indésirable sur des routes inégales où les angles de roulis ou d'inclinaison changent constamment. Dans ce cas, le domaine de validité du modèle utilisé se restreint, au détriment de la robustesse de la loi de commande des actionneurs du système de direction. Autrement dit, ce dispositif de compensation du décalage d'angle de volant est davantage orienté vers les systèmes avancés d'assistance à la conduite, mais n'est pas adapté pour être appliqué dans un système de contrôle de la conduite d'un véhicule en mode entièrement autonome, sans conducteur humain.

L'article "Making Bertha Drive an autonomous journey on a historié route" (par Julius Ziegler et al.) montre le contrôle autonome d'un véhicule ainsi qu'une estimation de biais de l'angle de braquage. Le document US6427130 B1 détermine le biais d'angle de braquage sous condition que le véhicule ne se trouve pas en pente latérale.

Dans ce contexte, la présente invention a pour but de proposer un dispositif permettant de compenser des décalages de l'angle du volant de direction et qui soit exempt des limitations précédemment évoquées.

A cette fin, l'invention concerne un dispositif de contrôle de l'angle de braquage d'un véhicule automobile comprenant un contrôleur latéral adapté à générer en sortie une commande vers au moins un actionneur d'un système de direction du véhicule agissant sur l'angle de braquage des roues directrices du véhicule par l'intermédiaire de l'angle de rotation du volant du véhicule, de façon à suivre une trajectoire dans un mode de conduite automatisée, ledit dispositif étant caractérisé en ce qu'il comprend en outre un module d'analyse de suivi de la trajectoire apte à détecter des conditions de route sans pente longitudinale et sans inclinaison latérale et, lorsque de telles conditions de route sont détectées, à fournir en sortie une valeur courante d'erreur d'angle de braquage des roues directrices du véhicule à un module de compensation automatique de décalage d'angle du volant relié audit contrôleur latéral.

Grâce à cet agencement, lors de la conduite en mode autonome, l'invention permet d'identifier et d'éliminer automatiquement et en temps réel tout décalage d'angle du volant, lié à un défaut d'alignement du volant avec les roues directrices du véhicule ou à une dégradation matérielle des capteurs. On évite ainsi d'avoir à re-calibrer manuellement le système de direction du véhicule, ce qui procure un gain important en termes de temps de maintenance et donc de coût.

3

Avantageusement, la sortie dudit contrôleur latéral est basée sur une minimisation de l'erreur de lacet entre une vitesse angulaire de lacet souhaitée, obtenue à partir d'une trajectoire souhaitée du véhicule, et la vitesse angulaire de lacet courante du véhicule estimée à partir d'un modèle du véhicule alimenté par une mesure courante d'angle du volant.

Avantageusement, le module de compensation de décalage d'angle du volant est apte à compenser instantanément un décalage entre l'angle de braquage des roues directrices et l'angle du volant en fonction de la valeur d'erreur d'angle de braquage fournie par le module d'analyse de suivi de la trajectoire du véhicule.

Avantageusement, le module de compensation de décalage d'angle du volant est adapté pour corriger la mesure courante d'angle du volant, la valeur corrigée de mesure d'angle du volant étant renvoyée dans le modèle de véhicule afin de générer une correction de la commande de l'actionneur du système de volant de direction du véhicule et compenser de manière itérative le décalage entre l'angle de braquage des roues directrices et l'angle du volant.

De préférence, le module de compensation de décalage d'angle du volant est adapté à appliquer successivement deux modes de réglage, respectivement un premier mode de réglage apte à permettre de corriger rapidement des décalages d'angle du volant d'au moins 1 degré et un second mode de réglage fin, correspondant à des décalages d'angle du volant inférieurs à 1 degré.

Avantageusement, le dispositif comprend un capteur embarqué apte à mesurer la vitesse angulaire de lacet du véhicule et un module de correction dudit capteur, apte à comparer la vitesse angulaire de lacet fournie par le capteur et la vitesse angulaire de lacet fournie par le modèle de véhicule et à faire correspondre les deux vitesses lorsque le décalage d'angle de volant a été compensé.

Avantageusement, ledit module de correction dudit capteur est activé quand le module de compensation de décalage d'angle du volant fonctionne selon ledit second mode de réglage fin.

Avantageusement, on prévoit des dispositifs de mesure aptes à détecter des valeurs de pente et d'angle d'inclinaison de la route sur la trajectoire à venir du véhicule, lesdites conditions de route étant vérifiées lorsque les valeurs reçues d'angle d'inclinaison et de pente sont inférieures à des valeurs de seuil respectives prédéterminées.

Avantageusement, l'erreur de suivi de voie dans la direction latérale du véhicule est calculée à partir d'une mesure de l'écart entre le centre de la voie et le centre de gravité du véhicule.

L'invention concerne également un véhicule automobile caractérisé en ce qu'il comprend un dispositif de contrôle tel que décrit ci-dessus.

D'autres caractéristiques et avantages de la présente invention apparaîtront plus clairement à la lecture de la description suivante donnée à titre d'exemple illustratif et non limitatif et faite en référence aux dessins annexés :

[Fig.1] est un schéma illustrant une architecture du dispositif de contrôle de l'invention ;

[Fig. 2] est un exemple de trajectoire suivi par un véhicule pour illustrer un exemple de mise en oeuvre du dispositif de contrôle de l'invention ;

[Fig. 3] est un graphe montrant l'évolution en fonction du temps du décalage de l'angle du volant, par rapport à la trajectoire du véhicule illustrée à la figure 2 ;

[Fig. 4] est un graphe montrant l'évolution en fonction du temps de l'erreur de suivi de trajectoire dans la direction latérale du véhicule le long de la trajectoire de la figure 2,

[Fig. 5] est un graphe montrant l'évolution en fonction du temps de la vitesse angulaire de lacet, telle que mesurée par un capteur embarqué sur le véhicule et telle que calculée à l'aide du modèle de véhicule.

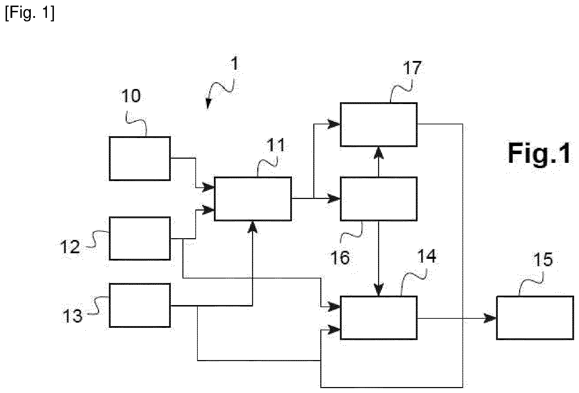

En référence à la figure 1, le dispositif 1 de compensation de l'angle de braquage des roues directrices du véhicule comprend un dispositif 10 embarqué de détection de marquage au sol des voies de circulation. Il peut s'agir par exemple d'une caméra embarqué orientée vers l'avant du véhicule automobile, par exemple installée en haut du pare-brise, au niveau de la jonction avec le toit du véhicule, ou encore installée derrière le rétroviseur intérieur du véhicule, de façon à permettre d'acquérir des images de la scène située devant le véhicule et à pouvoir détecter le marquage routier à l'avant du véhicule automobile.

En variante de l'utilisation de la caméra, on pourrait utiliser tout autre dispositif de détection embarqué, apte à détecter des limites de la route, jusqu'à l'horizon électronique. Par horizon électronique, on entend l'ensemble des informations relatives à l'environnement routier dans lequel le véhicule est susceptible d'évoluer dans un futur proche, c'est-à-dire en pratique jusqu'à la visibilité maximale permise par le dispositif de détection embarqué.

La caméra 10 est associée à une unité de traitement, qui récupère le flux d'images fourni par la caméra et l'analyse par des techniques de traitement d'image, pour détecter notamment les lignes de marquage routier au sol situées le long de la voie de circulation empruntée par le véhicule. L'unité de traitement est également adaptée pour fournir des informations relatives au tracé routier en fonction du marquage détecté, en particulier le nombre de voies, la largeur des accotements, la déviation latérale vers la voie centrale, un profil de courbure de la trajectoire.

Ces informations relatives au tracé routier sont fournies à un module 11 d'analyse de suivi de la trajectoire du véhicule, dont le rôle sera détaillé par la suite, qui reçoit également en entrée des données de pente longitudinale et d'angle d'inclinaison latérale (ou devers) de la route, fournies par une unité de mesure inertielle 12 du véhicule, comprenant des dispositifs de mesure aptes à détecter la pente longitudinale et l'angle d'inclinaison latérale dans la trajectoire à venir.

Le véhicule est également équipé d'un ensemble de capteurs embarqués 13, disposés au niveau de différents équipements du véhicule (volant, direction, freins, etc.) qui sont en mesure de fournir des informations relatives au comportement dynamique du véhicule, en particulier des informations telles que la vitesse, l'angle de cap, l'accélération, la vitesse angulaire de lacet du véhicule, etc. Ces informations relatives au comportement dynamique du véhicule sont également fournies en entrée du module 11 d'analyse de suivi de la trajectoire.

Les informations relatives au tracé routier et les informations relatives au comportement dynamique du véhicule sont fournies à un module de contrôle du véhicule en mode autonome, qui comprend notamment un contrôleur latéral 14, apte à générer à partir de ces informations, des signaux de commande à destination d'actionneurs en particulier au moins un actionneur du système de direction 15 du véhicule, agissant sur l'angle de braquage des roues directrices du véhicule par l'intermédiaire de l'angle de rotation du volant du véhicule, de façon à permettre de diriger le véhicule en mode autonome, c'est-à-dire sans actions du conducteur, par exemple en appliquant une stratégie de contrôle de suivi de la voie centrale, où les signaux de commande à l'actionneur visent à maintenir le véhicule au centre de la voie.

Le module de contrôle du véhicule en mode autonome comprend également un contrôleur longitudinal (non représenté) aptes à générer à partir des informations reçues en entrée, des signaux de commande du mouvement longitudinal à destination d'actionneurs 14 en particulier au moins un actionneur de systèmes de contrôle longitudinal du véhicule.

Ainsi, pour le placement longitudinal du véhicule, le contrôleur longitudinal est utilisé pour commander des actionneurs de freinage et de d'accélération du véhicule. Pour le placement latéral du véhicule, le contrôleur latéral du véhicule est utilisé pour commander des actionneurs du système de volant de direction du véhicule pour contrôler l'angle de braquage des roues, par exemple pour maintenir le véhicule au centre de la voie.

On va décrire plus en détail le fonctionnement du contrôleur latéral 14 utilisé dans le dispositif de compensation 1.

La sortie du contrôleur latéral est basée sur la minimisation de la vitesse angulaire de lacet du véhicule entre la trajectoire courante du véhicule et la trajectoire souhaitée du véhicule. La trajectoire souhaitée est calculée en fonction de l'information relative au tracé routier issue de l'unité de traitement associée à la caméra embarquée, de façon à générer un ensemble de points de cheminement correspondant à la trajectoire souhaitée du véhicule. La régulation mise en oeuvre vise donc à minimiser l'erreur de lacet entre la vitesse angulaire de lacet souhaitée, notée *YawRateDesired,* obtenue à partir de la trajectoire souhaitée calculée, et la vitesse angulaire de lacet courante du véhicule, notée *YawRateMeasuredFromModel,* estimée à partir d'un modèle du véhicule. Cette régulation est définie par l'équation suivante :

$$\Delta SteeringWheelAngle = YawRateDesired - YawRateMeasuredFromModel$$

La sortie du contrôleur latéral 14 est fournie au système de direction 15 du véhicule en application de la stratégie contrôle de suivi de la voie centrale. Comme indiqué plus haut, le contrôleur latéral utilise un modèle de véhicule pour calculer la vitesse angulaire de lacet courante. Cela permet de compenser les retards du système liés notamment au temps de réponse des actionneurs et du capteur de vitesse de lacet, augmentant ainsi la réactivité du système.

Le modèle de véhicule utilisé pour estimer la vitesse angulaire courante du véhicule est défini comme suit :

$$\dot{X}_v = A_v X_v + B_v u_v$$

$$Y_v = C_v X_v$$

Où $u_v$ est la commande d'angle du volant de direction et $X_v$ le vecteur d'état, défini comme suit :

$$X_v = \begin{bmatrix} y_v & v_y & \psi_v & \omega_v \end{bmatrix}$$

où $y_v$ est la position latérale du véhicule, $v_y$ la vitesse latérale du véhicule, $\psi_v$ l'angle de lacet et $\omega_v$ la vitesse angulaire de lacet du véhicule.

Les matrices A, B et C sont décrites ci-après :

$$A_v = \begin{bmatrix} 0 & 1 & v_x & 0 \\ 0 & \dfrac{-(C_f+C_r)}{mv_x} & 0 & \dfrac{-aC_f+bC_r}{mv_x} - v_x \\ 0 & 0 & 0 & 1 \\ 0 & \dfrac{-a^2C_f+b^2C_r}{I_z v_x} & 0 & \dfrac{-(C_f+C_r)}{I_z v_x} \end{bmatrix}$$

$$B_v = \begin{bmatrix} 0 & \dfrac{C_f}{m} & 0 & \dfrac{aC_f}{I_z} \end{bmatrix}^T$$

$$C_v = \begin{bmatrix} 0 & 0 & 0 & 1 \end{bmatrix}$$

où $C_f$ et $C_r$ correspondent à la raideur en virage respectivement au niveau des roues avant et arrière, $v_x$ est la vitesse du véhicule, m est la masse du véhicule, Iz est le moment d'inertie autour de l'axe vertical Z, et a et b sont les distances du centre de gravité du véhicule aux axes des roues avant et arrière respectivement.

Le modèle décrit ci-dessus utilisé par le contrôleur latéral pour estimer la vitesse angulaire de lacet est alimenté par la mesure courante de l'angle du volant et par la vitesse du véhicule.

On cherche ensuite à isoler les situations de conduite où l'erreur éventuelle du suivi de trajectoire n'est pas due à des configurations de route en pente longitudinale ou de route avec un angle d'inclinaison latérale. Pour ce faire, les données fournies par l'unité de mesure inertielle 12 sont utilisées par le module 11 d'analyse de de suivi de la trajectoire du véhicule pour identifier les configurations de route où une pente longitudinale ou un angle d'inclinaison latérale apparaît de façon significative, de façon à isoler les sections de route qui sont complètement plates et droites, c'est-à-dire sans pente longitudinale ni angle d'inclinaison latérale, ou en tous négligeables.

Comme indiqué précédemment, les informations relatives au tracé routier, les informations relatives au comportement dynamique du véhicule et les données de pente longitudinale et d'angle d'inclinaison latérale de la route sont combinées pour alimenter le module 11 d'analyse de suivi de la trajectoire du véhicule. Le module 11 d'analyse de suivi de la trajectoire du véhicule est prévu pour détecter une erreur de suivi de voie dans la direction latérale du véhicule et aussi pour identifier des conditions de route destinées à discriminer les sources potentielles de l'erreur.

L'erreur de suivi de voie dans la direction latérale du véhicule est calculée à partir d'une mesure de la distance, suivant une direction perpendiculaire au centre de la voie, entre le centre de la voie et le centre de gravité du véhicule.

Egalement, le rôle du module 11 d'analyse est de détecter des situations de conduite sur des sections de route qui sont droites et plates, c'est-à-dire où les valeurs d'angle d'inclinaison latérale et de pente longitudinale peuvent être négligées. Ces sections de route sont identifiées lorsque les valeurs reçues d'angle d'inclinaison et de pente sont inférieures à des valeurs de seuil respectives prédéterminées. Dans ces conditions, on considère que si une erreur de suivi de voie est détectée, cette erreur provient exclusivement d'un décalage entre l'angle de braquage des roues directrices et l'angle de rotation du volant (déterminé par le capteur de la position angulaire du volant), soit que ce décalage est lié à un défaut d'alignement des roues avec le volant de direction en usine, soit qu'il est lié à une dégradation matérielle avec le temps des différents capteurs utilisés pour le calcul des commandes de direction. Autrement dit, la compensation du décalage d'angle de volant est autorisée seulement lorsque ces conditions de route particulières sont vérifiées, c'est-à-dire que le véhicule roule sur des sections de route droites et plates.

Auquel cas, si une erreur de suivi de voie dans la direction latérale du véhicule est détectée, le module 11 d'analyse de suivie de trajectoire fournit en sortie une valeur d'erreur d'angle de braquage des roues directrices du véhicule à un module 16 de compensation automatique de l'angle du volant, en fonction de l'écart latéral détecté par rapport à la trajectoire de suivi de voie.

Ainsi, le module 11 surveille en permanence les performances de suivi de voie du véhicule afin d'identifier des erreurs potentielles dans le suivi de voie dans la direction latérale du véhicule et permet d'isoler celles qui sont strictement dues à un décalage entre l'angle de braquage des roues directrices et l'angle de rotation du volant, grâce à la condition sur l'existence d'une situation de conduite sur route plate et droite, dans laquelle les valeurs de pente longitudinale et d'angle d'inclinaison latérales sont inférieures à des valeurs de seuil respectives prédéterminées. Ainsi, il est possible de différencier la contribution du décalage entre l'angle de braquage des roues directrices et l'angle de rotation du volant au défaut de suivi de voie, de la contribution liée à l'angle d'inclinaison latérale de la route et/ou à la pente longitudinale.

Le module 16 de compensation automatique de l'angle du volant est relié au contrôleur latéral 14 et est conçu pour appliquer deux modes de réglage du décalage, selon la valeur d'erreur d'angle de braquage détectée. Un premier mode de réglage correspond à une situation où l'erreur détectée est importante. Par erreur importante, on entend une situation où l'erreur entre l'angle de braquage des roues directrice et l'angle du volant est supérieure à un degré. Dans ce cas, le décalage d'angle de volant est directement corrigé par pas par exemple de 1 degré. Le second mode de réglage correspond à un mode de réglage plus fin, à l'intérieur d'une marge d'un degré, pour des décalages d'angle de volant faibles, inférieurs à 1 degré. Le module 16 de compensation fournit donc une valeur de compensation au contrôleur latéral 14, permettant de corriger à la fois la valeur mesurée d'angle du volant et la commande à destination de l'actionneur agissant sur l'angle de braquage des roues directrices, de façon à compenser le décalage entre l'angle de braquage des roues et l'angle du volant.

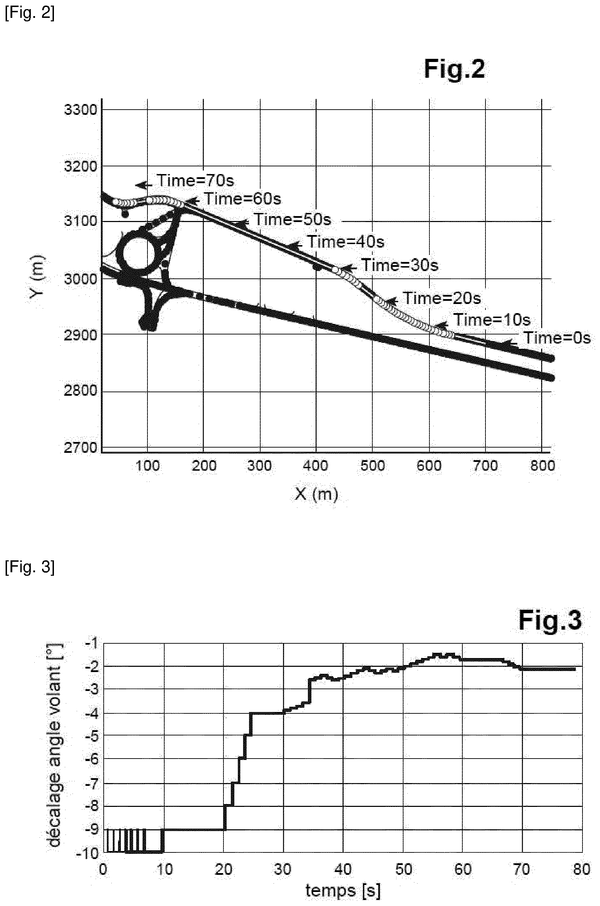

Ce principe est illustré en référence à la figure 3, qui montre un exemple d'évolution du décalage de l'angle du volant en fonction du temps, par rapport à la trajectoire du véhicule dans un référentiel X-Y, telle qu'illustrée à la figure 2. Selon cet exemple, le décalage d'angle du volant a été calibré manuellement, avec un décalage de -2 degrés (c'est-à-dire que le volant doit être tourné de 2 degrés vers la droite si l'on veut que les roues directrices du véhicule restent droites). Pour mieux illustrer le principe de l'invention, le décalage initial de l'angle de braquage du volant a été intentionnellement forcé à -10 degrés (c'est-à-dire que la position des roues droite correspond à une position du volant tourné de 10 degrés vers la droite).

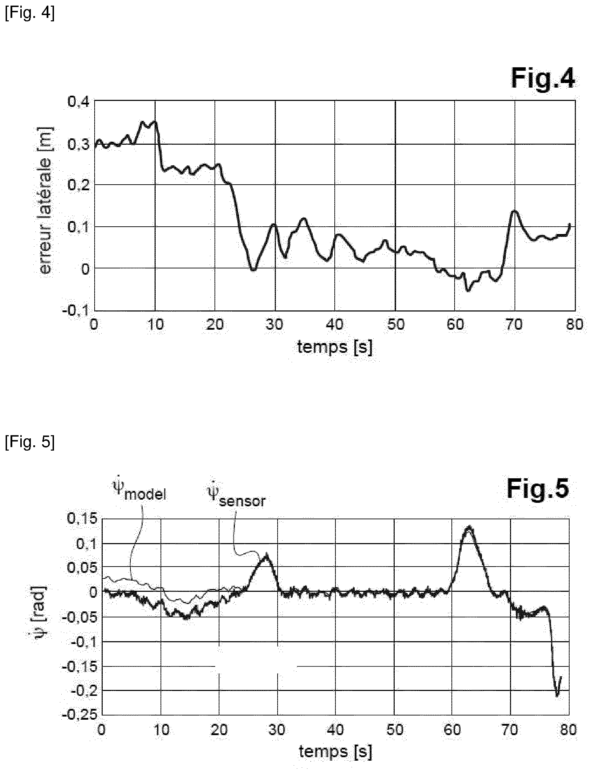

La figure 4 montre l'évolution en fonction du temps de l'erreur de suivi de trajectoire dans la direction latérale du véhicule pendant toute la durée de l'essai le long de la trajectoire de la figure 2. Aux environs de la 10$^{ième}$ seconde, une section de route droite et plate est détectée, et le système est alors autorisé à corriger la valeur de décalage d'angle du volant. A cet effet, le décalage est directement corrigé de 1 degré et passe de -10 degrés à -9 degrés selon l'exemple. Ensuite, le véhicule continue dans un virage de sorte que le décalage d'angle du volant reste fixé à cette valeur de -9 degrés. L'impact de cette correction du décalage de l'angle du volant peut être clairement apprécié dans l'évolution de l'erreur de suivi de trajectoire dans la direction latérale, qui est alors maintenue à environ 22 cm, ce qui améliore déjà les performances initiales de suivi de trajectoire.

Entre les 20$^{ième}$ et 25$^{ième}$ secondes, des conditions de route plate et droite sont détectées et le véhicule est alors à nouveau autorisé à corriger le décalage d'angle du volant. Cette correction s'effectue alors selon le premier mode de réglage du décalage, par pas de 1 degré, réduisant l'erreur de suivi de trajectoire dans la direction latérale à presque zéro, avec une valeur de décalage obtenue, après correction, de - 4 degrés. On peut constater à la figure 3 que la partie de trajectoire parcourue entre les 20$^{ième}$ et 25$^{ième}$ secondes représente un petit tronçon de route droite et plate s'étendant entre deux virages, ce qui démontre la capacité du système à corriger rapidement le décalage d'angle du volant, grâce à ce premier mode de réglage du décalage. Après la 25$^{ième}$ seconde, le véhicule entre de nouveau en virage et la correction du décalage n'est plus autorisée. Jusqu'ici, le module 16 de compensation automatique de l'angle du volant emploie le premier mode de réglage du décalage, c'est-à-dire sans réglage fin. Autrement dit, le seuil pour une correction du décalage en utilisant le mode de réglage fin n'a pas encore été activé.

Après la 35ième seconde, des conditions de route plate et droite sont à nouveau détectées et le décalage est d'abord directement corrigé de 1 degré et passe de -3,5 degrés à -2,5 degrés selon l'exemple. Le module 16 de compensation automatique de l'angle du volant applique alors le mode de réglage fin pour corriger le décalage de l'angle du volant. En effet, la valeur courante du décalage est d'environ -2,5 degrés alors que la valeur réelle issue de la calibration manuelle est de -2 degrés. Ce mode de réglage fin est maintenu pendant la période allant de la 35$^{ième}$ à la 60$^{ième}$ seconde, au cours de laquelle des conditions de route droite et plate sont toujours détectées, permettant de corriger légèrement le décalage, en se rapprochant de la valeur de - 2 degrés. En référence à la figure 4, on voit que l'erreur de suivi de voie dans la direction latérale est maintenue sous les 10 centimètres pendant cette période où le décalage d'angle du volant est compensé.

Ainsi, une fois que la correction du décalage a été autorisée par la vérification préalable du respect des conditions de route droite et plate, le décalage est progressivement corrigé en temps réel, de sorte à définir une nouvelle loi de commande entre l'angle de braquage des roues directrices et l'angle de rotation du volant.

Une fois que le décalage est entièrement compensé, le décalage dans le capteur embarqué de vitesse angulaire de lacet est également vérifié, en adaptant la valeur fournie par le capteur en conséquence pour alimenter les contrôleurs du véhicule.

Le module 16 de compensation est également relié à un module 17 de correction du capteur de la vitesse angulaire de lacet. En effet, du fait du décalage initial d'angle du volant, il existe un décalage entre la vitesse angulaire de lacet fournie par le modèle et la vitesse angulaire de lacet fournie par le capteur embarqué. Aussi, il est nécessaire de recalibrer le capteur embarqué de vitesse angulaire de lacet, du fait de ce décalage.

Le module 17 de correction du capteur de la vitesse angulaire de lacet est donc prévu pour comparer les deux types de mesure de vitesse angulaire de lacet, respectivement la vitesse angulaire de lacet fournie par le modèle $\dot{\psi}_{model}$ et la vitesse angulaire de lacet fournie par le capteur embarqué $\dot{\psi}_{sensor}$. Il met en oeuvre un filtre de données et une compensation de retard temporel pour faire correspondre les deux systèmes, modèle et capteur, en permettant d'éliminer le déphasage de la vitesse angulaire de lacet obtenue à partir du modèle par rapport à la vitesse angulaire de lacet obtenue par le capteur. En cas de décalage entre les deux types de mesure, le capteur embarqué de vitesse angulaire de lacet est recalibré en fonction de ce décalage, de façon à faire coïncider les deux types de mesure, comme illustré à la figure 5. Le module 17 de correction commence à fonctionner lorsque le module 16 de compensation automatique de l'angle du volant fonctionne dans le second mode de réglage fin (soit après environ 30 secondes selon l'exemple).

Ainsi, à ce stade, le décalage d'angle du volant est largement compensé et le véhicule suit correctement la trajectoire prévue, l'erreur de suivi de trajectoire dans la direction latérale étant fortement réduite. Dans cette situation, le module 17 de correction du capteur embarqué de vitesse angulaire de lacet permet alors d'ajuster tous décalage dans les mesures fournies par le capteur jusqu'à ce que la valeur fournie par le modèle et la valeur fournie par le capteur correspondent, ce qui indique que le capteur est parfaitement calibré. La valeur corrigée de vitesse angulaire de lacet fournie en sortie du module 17 de correction du capteur est alors utilisée pour alimenter le contrôleur latéral 14. Pour assurer une parfaite calibration, cette correction du capteur embarqué de vitesse angulaire de lacet est toujours effectuée une fois que le décalage d'angle du volant en mode de conduite entièrement automatisée est corrigé.

La performance du contrôleur latéral du véhicule fonctionnant en mode de conduite entièrement automatisée, est donc analysée en temps réel par le module 11 en fonction du tracé de la route afin d'évaluer sa réponse. Si une dégradation des performances dans le suivi de trajectoire est observée et seulement si cette dégradation survient en raison d'un désalignement du volant et des roues directrices, une compensation est effectuée sur l'angle de braquage pour assurer des performances optimales du contrôle latéral du véhicule en mode autonome. Cette compensation est constamment vérifiée par rapport aux performances du suivi de trajectoire du véhicule pour tenir compte notamment de toute dégradation mécanique potentielle avec le temps du système de direction.

De plus, y compris lorsque le véhicule autonome suit correctement la trajectoire prévue, le capteur embarqué de vitesse angulaire de lacet est également vérifié pour corriger tout biais potentiel dans son étalonnage et adapter sa réponse en conséquence.

**Revendications**

1. Dispositif (1) de contrôle de l'angle de braquage d'un véhicule automobile comprenant un contrôleur latéral (14) adapté à générer en sortie une commande vers au moins un actionneur d'un système de direction (15) du véhicule agissant sur l'angle de braquage des roues directrices du véhicule par l'intermédiaire de l'angle de rotation du volant du véhicule, de façon à suivre une trajectoire dans un mode de conduite automatisée, ledit dispositif étant **caractérisé en ce qu'**il comprend en outre un module (11) d'analyse de suivi de la trajectoire apte à détecter des conditions de route sans pente longitudinale et sans inclinaison latérale et, lorsque de telles conditions de route sont détectées, à fournir en sortie une valeur courante d'erreur d'angle de braquage des roues directrices du véhicule à un module (16) de compensation automatique de décalage d'angle du volant relié audit contrôleur latéral.

2. Dispositif selon la revendication 1, **caractérisé en ce que** la sortie dudit contrôleur latéral (14) est basée sur une minimisation de l'erreur entre une vitesse angulaire de lacet souhaitée, obtenue à partir d'une trajectoire souhaitée du véhicule, et la vitesse angulaire de lacet courante du véhicule estimée à partir d'un modèle du véhicule alimenté par une mesure courante d'angle du volant.

3. Dispositif selon la revendication 1 ou 2, **caractérisé en ce que** le module (16) de compensation de décalage d'angle du volant est apte à compenser instantanément un décalage entre l'angle de braquage des roues directrices et l'angle du volant en fonction de la valeur d'erreur d'angle de braquage fournie par le module d'analyse de performance de suivi de la trajectoire du véhicule.

4. Dispositif selon les revendications 2 et 3, **caractérisé en ce que** le module (16) de compensation de décalage d'angle du volant est adapté pour corriger la mesure courante d'angle du volant, la valeur corrigée de mesure d'angle du volant étant renvoyée dans le modèle de véhicule afin de générer une correction de la commande de l'actionneur du système de direction (15) du véhicule et compenser de manière itérative le décalage entre l'angle de braquage des roues directrices et l'angle du volant.

5. Dispositif selon la revendication 3 ou 4, **caractérisé en ce que** le module (16) de compensation de décalage d'angle du volant est adapté à appliquer successivement deux modes de réglage, respectivement un premier mode de réglage apte à permettre de corriger rapidement des décalages d'angle du volant d'au moins 1 degré et un second mode de réglage fin, correspondant à des décalages d'angle du volant inférieurs à 1 degré.

6. Dispositif selon l'une quelconque des revendications 2 à 5, **caractérisé en ce qu'**il comprend un capteur embarqué apte à mesurer la vitesse angulaire de lacet du véhicule et un module (17) de correction dudit capteur, apte à comparer la vitesse angulaire de lacet fournie par le capteur et la vitesse angulaire de lacet fournie par le modèle de véhicule et à faire correspondre les deux vitesses lorsque le décalage d'angle de volant a été compensé.

7. Dispositif selon les revendications 5 et 6, **caractérisé en ce que** ledit module de correction dudit capteur est activé quand le module de compensation de décalage d'angle du volant fonctionne selon ledit second mode de réglage fin.

8. Dispositif selon l'une quelconque des revendications précédentes, **caractérisé en ce qu'**il comprend des dispositifs de mesure aptes à détecter des valeurs de pente et d'angle d'inclinaison de la route sur la trajectoire à venir du véhicule, lesdites conditions de route étant vérifiées lorsque les valeurs reçues d'angle d'inclinaison et de pente sont inférieures à des valeurs de seuil respectives prédéterminées.

9. Dispositif selon l'une quelconque des revendications précédentes, **caractérisé en ce que** l'erreur de suivi de voie dans la direction latérale du véhicule est calculée à partir d'une mesure de l'écart entre le centre de la voie et le centre de gravité du véhicule.

10. Véhicule automobile, **caractérisé en ce qu'**il comprend un dispositif (1) de contrôle selon l'une quelconque des revendications précédentes.

**Patentansprüche**

1. Vorrichtung (1) zur Kontrolle des Einschlagwinkels eines Kraftfahrzeugs, die einen seitlichen Controller (14) enthält, der geeignet ist, am Ausgang einen Befehl an mindestens einen Stellantrieb eines Lenksystems (15) des Fahrzeugs zu erzeugen, das auf den Einschlagwinkel der gelenkten Räder des Fahrzeugs mittels des Drehwinkels des Lenkrads des Fahrzeugs einwirkt, um in einem Modus automatisierten Fahrens einer Fahrspur zu folgen, wobei die Vorrichtung **dadurch gekennzeichnet ist, dass** sie außerdem ein Modul (11) zur Analyse der Verfolgung der Fahrspur enthält, das fähig ist, Straßenbedingungen ohne Längsgefälle und ohne seitliche Neigung zu erkennen und, wenn solche Straßenbedingungen erkannt werden, am Ausgang einen aktuellen Einschlagwinkel-Fehlerwert der gelenkten Räder des Fahrzeugs an ein mit dem seitlichen Controller verbundenes Modul (16) zur automatischen Lenkradwinkel-Offsetkompensation zu liefern.

2. Vorrichtung nach Anspruch 1, **dadurch gekennzeichnet, dass** der Ausgang des seitlichen Controllers (14) auf einer Minimierung des Fehlers zwischen einer gewünschten Gierwinkelgeschwindigkeit, die ausgehend von einer gewünschten Fahrspur des Fahrzeugs erhalten wird, und der aktuellen Gierwinkelgeschwindigkeit des Fahrzeugs basiert, die ausgehend von einem Modell des Fahrzeugs geschätzt wird, das mit einer aktuellen Lenkradwinkelmessung versorgt wird.

3. Vorrichtung nach Anspruch 1 oder 2, **dadurch gekennzeichnet, dass** das Modul (16) zur Lenkradwinkel-Offsetkompensation fähig ist, augenblicklich einen Offset zwischen dem Einschlagwinkel der gelenkten Räder und dem Lenkradwinkel abhängig vom Einschlagwinkel-Fehlerwert zu kompensieren, der vom Analysemodul der Fahrspur-Verfolgungsleistung des Fahrzeugs geliefert wird.

4. Vorrichtung nach den Ansprüchen 2 und 3, **dadurch gekennzeichnet, dass** das Modul (16) zur Lenkradwinkel-Offsetkompensation geeignet ist, um die aktuelle Lenkradwinkelmessung zu korrigieren, wobei der korrigierte Lenkradwinkelmesswert in das Fahrzeugmodell zurückgeschickt wird, um eine Korrektur der Steuerung des Controllers des Stellantriebs des Lenksystems (15) des Fahrzeugs zu erzeugen und den Offset zwischen dem Einschlagwinkel der gelenkten Räder und dem Lenkradwinkel iterativ zu kompensieren.

5. Vorrichtung nach Anspruch 3 oder 4, **dadurch gekennzeichnet, dass** das Modul (16) zur Lenkradwinkel-Offsetkompensation geeignet ist, um nacheinander zwei Einstellmodi anzuwenden, d.h. einen ersten Einstellmodus, der fähig ist, die schnelle Korrektur der Lenkradwinkel-Offsets um mindestens ein Grad zu ermöglichen, und einen zweiten Modus der Feineinstellung entsprechend Lenkradwinkel-Offsets von weniger als 1 Grad.

6.  Vorrichtung nach einem der Ansprüche 2 bis 5, **dadurch gekennzeichnet, dass** sie einen eingebauten Sensor, der fähig ist, die Gierwinkelgeschwindigkeit des Fahrzeugs zu messen, und ein Korrekturmodul (17) des Sensors enthält, das fähig ist, die vom Sensor gelieferte Gierwinkelgeschwindigkeit und die vom Fahrzeugmodell gelieferte Gierwinkelgeschwindigkeit zu vergleichen und die zwei Geschwindigkeiten in Übereinstimmung zu bringen, wenn der Lenkradwinkel-Offset kompensiert wurde.

7.  Vorrichtung nach den Ansprüchen 5 und 6, **dadurch gekennzeichnet, dass** das Korrekturmodul des Sensors aktiviert wird, wenn das Modul zur Lenkradwinkel-Offsetkompensation gemäß dem zweiten Feineinstellungsmodus arbeitet.

8.  Vorrichtung nach einem der vorhergehenden Ansprüche, **dadurch gekennzeichnet, dass** sie Messvorrichtungen enthält, die fähig sind, Gefälle- und Neigungswinkelwerte der Straße auf der kommenden Fahrspur des Fahrzeugs zu erkennen, wobei die Straßenbedingungen überprüft werden, wenn die empfangenen Neigungswinkel- und Gefällewerte niedriger sind als vorbestimmte Schwellenwerte.

9.  Vorrichtung nach einem der vorhergehenden Ansprüche, **dadurch gekennzeichnet, dass** der Spurverfolgungsfehler in der seitlichen Richtung des Fahrzeugs ausgehend von einer Messung der Abweichung zwischen der Mitte der Spur und dem Schwerpunkt des Fahrzeugs berechnet wird.

10. Kraftfahrzeug, **dadurch gekennzeichnet, dass** es eine Kontrollvorrichtung (1) nach einem der vorhergehenden Ansprüche enthält.


**Claims**

1.  Device (1) for controlling the steering angle of a motor vehicle comprising a lateral controller (14) adapted to generate as output a command to at least one actuator of a steering system (15) of the vehicle acting on the steering angle of the guiding wheels of the vehicle via the angle of rotation of the steering wheel of the vehicle, so as to follow a trajectory in an automated driving mode, said device being **characterized in that** it further comprises a trajectory following analysis module (11) capable of detecting road conditions without longitudinal slope and without lateral inclination and, when such road conditions are detected, of supplying as output a current vehicle guiding wheel steering angle error value to an automatic steering wheel angle deviation compensation module (16) linked to said lateral controller.

2.  Device according to Claim 1, **characterized in that** the output of said lateral controller (14) is based on a minimization of the error between a desired angular yaw rate, obtained from a desired trajectory of the vehicle, and the current angular yaw rate of the vehicle estimated on the basis of a vehicle model supplied by a current steering wheel angle measurement.

3.  Device according to Claim 1 or 2, **characterized in that** the steering wheel angle deviation compensation module (16) is capable of instantaneously compensating a deviation between the steering angle of the guiding wheels and the steering wheel angle as a function of the steering angle error value supplied by the module for analyzing the trajectory following performance of the vehicle.

4.  Device according to Claims 2 and 3, **characterized in that** the steering wheel angle deviation compensation module (16) is adapted to correct the current steering wheel angle measurement, the corrected steering wheel angle measurement value being returned to the vehicle model in order to generate a correction of the control of the actuator of the steering system (15) of the vehicle and iteratively compensate the deviation between the steering angle of the guiding wheels and the steering wheel angle.

5.  Device according to Claim 3 or 4, **characterized in that** the steering wheel angle deviation compensation module (16) is adapted to successively apply two setting modes, respectively a first setting mode capable of allowing steering wheel angle deviations of at least 1 degree to be rapidly corrected and a second, fine setting mode, corresponding to steering wheel angle deviations of less than 1 degree.

6.  Device according to any one of Claims 2 to 5, **characterized in that** it comprises an embedded sensor capable of measuring the angular yaw rate of the vehicle and a correction module (17) of said sensor, capable of comparing the angular yaw rate supplied by the sensor and the angular yaw rate supplied by the vehicle model and of matching the two rates when the steering wheel angle deviation has been compensated.

7. Device according to Claims 5 and 6, **characterized in that** said correction module of said sensor is activated when the steering wheel angle deviation compensation module operates according to said second, fine setting mode.

8. Device according to any one of the preceding claims, **characterized in that** it comprises measurement devices that are capable of detecting slope and inclination angle values of the road on the future trajectory of the vehicle, said road conditions being verified when the received inclination angle and slope values are less than predetermined respective threshold values.

9. Device according to any one of the preceding claims, **characterized in that** the lane keeping error in the lateral direction of the vehicle is calculated on the basis of a measurement of the difference between the center of the lane and the center of gravity of the vehicle.

10. Motor vehicle, **characterized in that** it comprises a control device (1) according to any one of the preceding claims.

[Fig. 1]

Fig.1

[Fig. 2]

Fig.2

[Fig. 3]

Fig.3

[Fig. 4]

**Fig.4**

[Fig. 5]

**Fig.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102008026233

- US 6427130 B1

**Littérature non-brevet citée dans la description**

- **JULIUS ZIEGLER.** *Making Bertha Drive an autonomous journey on a historié route*